# EUROPEAN PATENT APPLICATION

(11) **EP 2 153 927 A1**
(43) Date of publication of application: **17.02.2010**
(21) Application number: 09167349.1
(22) Date of filing: 06.08.2009
(51) Int. Cl.: B23K 20/12

(54) **Spindle-integrated cooling and collection device for stir friction welder**

(30) Priority: 13.08.2008 US 228448
(71) Applicant: Delphi Technologies, Inc., Troy, MI 48007 (US)
(72) Inventor: Garner, Timothy D., Kokomo, IN 46902 (US)
(74) Representative: Denton, Michael John

(57) **Abstract**

A friction-stir welding apparatus includes a friction-stir welding tool (10), a spindle (32) on which the tool is located, bearings (34) supporting the spindle for rotational movement, and a heat sink (30) that is mounted on the spindle between the friction-stir welding tool and the bearings. This arrangement reduces and/or eliminates the need for more expensive and complex cooling means, such as a water cooled jacket having seals and a pump. Expected benefits include increased reliability and economy of operation.

## Description

### TECHNICAL FIELD

This invention pertains to friction-stir welding equipment, and more particularly to improved cooling of stir welding equipment tools.

### BACKGROUND OF THE INVENTION

Friction-stir welding is a solid-state joining process in which a rotating tool is directed along a joint line between two pieces (e.g., aluminium components) that are to be welded together. Frictional heat is generated between a wear-resistant welding tool shoulder and nib, and the material of the work pieces. This frictional heat, along with heat generated by the mechanical mixing process and the adiabatic heat within the material causes the stirred materials to soften without reaching the melting point, allowing the tool to traverse along the weld line in a plasticized tubular shaft of metal. Welding of the work pieces is facilitated by plastic deformation in the solid state involving dynamic crystallization of the base material.

The solid-state nature of friction-stir welding leads to several advantages as compared with fusion welding methods. For example, porosity, solute redistribution, solidification cracking and liquation cracking are not an issue during friction-stir welding. Generally, friction-stir welding has been found to produce a low concentration of defects and is very tolerant to variations in parameters and materials. Generally, friction-stir welding has been found to provide welds exhibiting good mechanical properties. Friction-stir welding also provides improved safety as compared to conventional fusion-welding processes because of the absence of toxic fumes and/or the spatter of molten material. Friction-stir welding is also desirable as compared to fusion-welding processes because it does not utilize consumables, is easily automated, can be operated in all positions, provides a weld having a good appearance that eliminates or reduces the need for expensive machining, and has a low environmental impact.

However, the heat generated during friction-stir welding is conducted up the spindle on which the friction-stir welding tool is mounted toward bearings supporting the spindle for rotation. Spindles for friction-stir welding tools typically are water-cooled. This requires complex seals, pumps, etc. that require substantial maintenance and can reduce reliability. In an effort to reduce the amount of heat being transported from the friction-stir welding tool to the bearings, the tool length may be increased. However, this causes much higher loads on the spindle bearings because of the high side forces at the tool interface.

### SUMMARY OF THE INVENTION

The invention incorporates into a stir-welding apparatus improved cooling means that eliminate the need for water cooling seals, pumps and the like, reduce maintenance requirements, and/or increase reliability. A combination of these advantages is achieved by using, in a stir-welding apparatus having a friction-stir welding tool, a spindle on which the friction-stir welding tool is located, and bearings supporting the spindle for rotational movement, a heat sink that is mounted on the spindle between the friction-stir welding tool and the bearings.

These and other features, advantages and objects of the present invention will be further understood and appreciated by those skilled in the art by reference to the following specification, claims and appended drawings.

### BRIEF DESCRIPTION OF THE DRAWINGS

The present invention will now be described, by way of example, with reference to the accompanying drawings, in which:

FIG. 1 is a fragmentary respective view showing a friction-stir welding tool used for welding two work pieces together along a joint line.

FIG. 2 is a top perspective view of a heat sink used in a friction-stir welding apparatus in accordance with the invention.

FIG. 3 is a perspective view of a friction-stir welding apparatus in accordance with the invention, illustrating certain details of the apparatus.

FIG. 4 is a schematic elevational side view of a stir-friction apparatus in accordance with the invention.

### DESCRIPTION OF THE PREFERRED EMBODIMENT

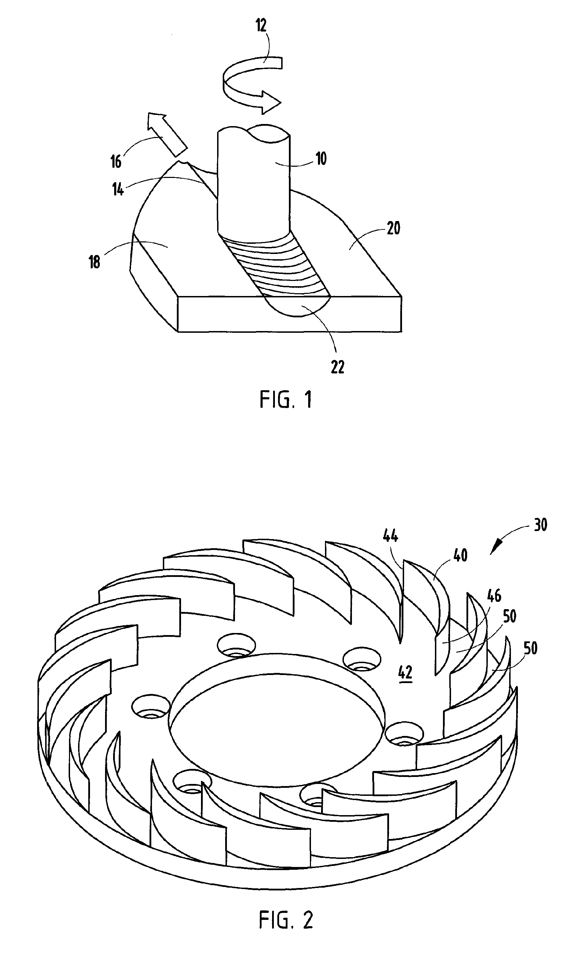

FIG. 1 illustrates a friction-stir welding process in which a friction-stir welding tool 10 is rotated at high speeds (typically from about 2,000 to about 4,000 RPM) as indicated by arrow 12, and moved linearly along a joint line 14 in a direction indicated by arrow 16, causing work pieces 18 and 20 to become welded together at a weld zone 22.

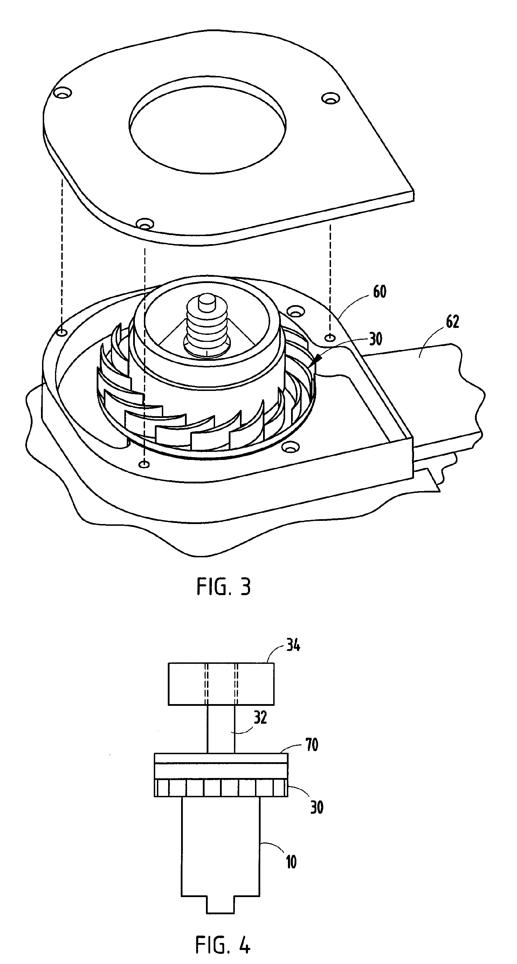

For a typical friction-stir welding apparatus the friction-stir welding tool has or is connected to a spindle mounted in a bearing to facilitate high speed rotational movement of the spindle and tool. Because of the high temperatures (at or near the melting point of the work pieces that are to be joined together) generated during friction-stir welding, and because the friction-stir welding tool and the spindle are made of material having a high thermal conductivity, it is typically necessary to cool the bearings during operation, such as by circulating cooling water through the tool. In one aspect of the invention, there is provided a heat sink 30 (see FIGs. 2 and 4) mounted on spindle 32 between tool 10 and bearings 34 to reduce or eliminate the need for water cooling.

Heat sink 30 is typically composed of a material having a high thermal conductivity, for example aluminum. The term "high thermal conductivity" as used herein refers to a thermal conductivity of at least about 10 W/(mK). Aluminum has a thermal conductivity of about 237 W/(mK).

As shown in FIG. 2, heat sink 30 may include a plurality of blades or fins 40 that project substantially orthogonally from a planar surface 42 of heat sink 30. Fins 40 may act as fan blades that move air as heat sink 30 is rotated. Additionally, fins 40 increase the surface area of heat sink 30 that is available for convective heat transfer from the heat sink to air being moved past fins 40. The term "substantially orthogonally" as used herein means that the angle formed between the opposite walls 44 and 46 of fins 40 form an angle with the planar surface 42 of heat sink 30 that is approximately 90 degrees (e.g., from about 85 degrees to about 95 degrees).

As shown in the illustrated embodiment, fins 40 may preferably have arcuate walls 44, 46, with fins 40 having an overall transverse profile that is a crescent shape. Also, as illustrated, fins 40 are preferably spaced apart to define adjacent curved channels 50.

As illustrated in FIG. 3, a shroud 60 may be provided to surround heat sink 30.

Because heat sink 30 is made of relatively thick, highly thermally conductive material (e.g., aluminum), it draws heat from the spindle 32 before it reaches bearings 34. The airflow created as heat sink 30 is rotated at high speeds with spindle 32 and friction-stir welding tool 10, causes heat to be carried away from spindle 32. Since airflow is generated from the center of spindle 30, the apparatus of this invention provides the additional benefit of collecting and removing debris and/or fumes generated during friction-stir welding. Shroud 60 surrounds the rotating heat sink 30, focusing collection of heat, debris and/or fumes to an area concentric to the friction-stir welding tool, and channels the airflow out a conduit 62 to a filter or collection device (not shown), such as a centrifugal or vacuum pump.

Heat sink 30 can also be incorporated directly into spindle material 32, fastened directly to spindle 32, or sandwiched between friction-stir welding tool 10 and spindle 32.

It may also be desirable to include insulating materials or layers to minimize heat that flows into the spindle 32 and bearings 34. For example, a thermally insulating material 70 may be disposed between heat sink 30 and spindle 32. Insulating material 70 may be joined to heat sink 30. In general, a suitable thermally insulating material 70 has a thermal conductivity that is less than 1 W/(mK).

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A friction-stir welding apparatus comprising:
a friction-stir welding tool;
a spindle on which the friction-stir welding tool is located;
bearings supporting the spindle for rotational movement; and
a heat sink mounted on the spindle between the tool and the bearings.

2. The apparatus of claim 1, wherein the heat sink is comprised of aluminium.

3. The apparatus of claim 1, wherein the heat sink includes a plurality of fins that project substantially orthogonally from a planar surface of the heat sink.

4. The apparatus of claim 1, wherein each of the fins has arcuate walls.

5. The apparatus of claim 1, wherein each of the fins has a crescent shape and wherein the plurality of fins are spaced apart to define adjacent curved channels.

6. The apparatus of claim 1, further comprising a shroud that surrounds the heat sink.

7. The apparatus of claim 6, wherein the shroud includes an outlet opening, and the apparatus further comprises a conduit connected to the outlet opening for conveying air away from the tool.

8. The apparatus of claim 1, wherein the heat sink is integrated into the tool.

9. The apparatus of claim 1, wherein the heat sink is a separate component fastened directly to the spindle.

10. The apparatus of claim 1, further comprising a thermally insulating material disposed between the heat sink and the spindle.

11. The apparatus of claim 10, wherein the insulating material is a layer of material joined to the heat sink.
